# EUROPÄISCHE PATENTSCHRIFT

(11) **EP 1 944 254 B1**
(45) Veröffentlichungstag und Bekanntmachung des Hinweises auf die Patenterteilung: **08.07.2009**
(21) Anmeldenummer: 07025077.4
(22) Anmeldetag: 22.12.2007
(51) Int. Cl.: B65G 47/54, B42C 19/08

(54) **Vorrichtung zum Transport von Druckprodukten**
Device for transporting printed material
Dispositif destiné au transport de produits d'impression

(30) Priorität: 12.01.2007 DE 102007001800
(43) Veröffentlichungstag der Anmeldung: 16.07.2008
(73) Patentinhaber: Kolbus GmbH & Co. KG, D-32369 Rahden (DE)
(72) Erfinder: Meineke, Torsten, 27211 Bassum (DE); Brommer, Carsten, 49545 Tecklenburg/Leeden (DE)

(56) Entgegenhaltungen:
- DE-A1- 3 203 819
- US-A- 4 039 072
- US-A1- 2002 108 839
- US-A1- 2005 077 145

## Beschreibung

Die Erfindung betrifft eine Vorrichtung zum Transport von Druckprodukten, wie Buchblocks, Bücher oder Stapel aus Druckerzeugnissen, insb. aus gefalzten und/oder ungefalzten Druckbogen, mit einer Fördereinheit, bestehend aus mehreren parallel zueinander angeordneten, antreibbaren Endlosfördermitteln, mit einem Rollengang aus mehreren, jeweils zwischen den Endlosfördermitteln angeordneten Rollen, deren Drehachsen parallel zur Förderrichtung der Fördereinheit orientiert sind, und mit einer zwischen der Fördereinheit und dem Rollengang relativen Hubbewegung.

Eine derartige Vorrichtung ist aus der Patentschrift DD 105 173 bekannt. Auf einem Abschnitt einer Rollenbahn sind zwischen den in Förderrichtung angetriebenen Förderrollen quer zu diesen antreibbare Förderelemente, bspw. quer zur Förderrichtung umlaufende Förderketten, über die obere Ebene der Förderrollen anhebbar und unter dieser Ebene absenkbar. Mit der Vorrichtung können auf einer durchgehenden Rollenbahn geförderte Gegenstände in bestimmten Bereichen der Rollenbahn an rechtwinklig dazu angeordnete Rollenbahnen übergeben bzw. von diesen zur Weiterförderung auf der durchgehenden Rollenbahn übernommen werden.

Aus der DE 28 43 599 A1 ist eine Fördereinrichtung für Buchblocks oder Bücher vorbekannt, bei der zwischen umlaufenden Bändern eines schwenkbaren Bändersystems angetriebene Walzen mit ihrer Achse annähernd längs der Förderrichtung der Bänder angeordnet sind und die Förderebene der gestellfest gelagerten Walzen bei oberer Schwenkstellung des Bändersystems unter der Förderebene der Bänder und bei unterer Schwenkstellung des Bändersystems darüber liegt. Das Bändersystem ist als Förderabschnitt in einer aus Transportbändern gebildeten Förderbahn vorgesehen. Mit dem Abschwenken des Bändersystems kann ein Druckprodukt von den Walzen auf ein rechtwinklig zur Förderbahn angeordnetes Transportband abgefördert werden. Ein umgekehrter Betrieb der Fördereinrichtung im Sinne eines Einschleusens ist vorstellbar.

In der VDI Richtlinie 2340 sind verschiedene Ausschleusungsprinzipien systematisch dargestellt.

Nachteilig bei den vorgenannten Vorrichtungen ist, dass beim Transport insbesondere empfindlicher Stückgüter, wie sie Buchblocks, Bücher oder Stapel aus Druckerzeugnissen, insb. aus gefalzten und/oder ungefalzten Druckbogen, oder dgl. Druckprodukte darstellen, ein produktschonendes Ein- und Ausschleusen bzw. Übereckfördern nicht gewährleistet werden kann. Die Druckprodukte sind durch das Abheben oder Absetzen auf kontinuierliche laufende Förderer abrupten Richtungswechseln und schlupfbehafteten Beschleunigungsvorgängen ausgesetzt, was zum Markieren der Oberflächen oder zur Deformation bis hin zur Zerstörung der Druckprodukte bzw. Stapel führen kann.

Aus der EP 1 380 523 A1 ist eine Übergabeeinrichtung für stückhaftes Fördergut bekannt, bei der ein zur Übergabeeinrichtung transportiertes Fördergut mit heb- und senkbaren Bremsleisten von der Förderebene abgehoben und abgebremst wird. Das Fördergut wird anschließend über die sich etwas absenkenden Bremsleisten an den sich gleichzeitig über die Förderebene aushebenden Rollengang zur Querabförderung des Förderguts übergeben. Die jeweils von Parallelogrammhubwerken erzeugten Hubbewegungen für die Bremsleisten und für den Rollengang sind bewegungsgekoppelt, indem die auf gleichen Schwenkachsen angeordneten Schwinghebel in einem definierten Winkel zueinander festgelegt sind. In der unteren Ausgangslage sind die Schwinghebel des Parallelogrammhubwerks für den Rollengang ungefähr parallel zur Förderebene orientiert, während die Schwinghebel des Parallelogrammhubwerks für die Bremsleisten unmittelbar vor deren senkrechten Zenitstellung orientiert sind. Durch das gemeinsame Verschwenken der genannten Schwinghebel vollführt der Rollengang eine Vertikalbewegung mit einer vergleichsweise geringen Horizontalbewegung, während die Bremsleisten über deren Zenitstellung hinaus zunächst angehoben und abschließend minimal abgesenkt werden. Die Horizontalbewegung der Bremsleisten wird genutzt, um ein auf den Bremsleisten abgebremstes Fördergut gegen ein Anschlagelement zu schieben und auszurichten.

Die Übergabeeinrichtung eignet sich sowohl zum Ausschleusen als auch zum Einschleusen von Fördergut. Beim Ausschleusen wird das abgehobene Fördergut von den Bremsleisten abgebremst. Beim Einschleusen wird es durch die gleichzeitig mit der Absenkbewegung stattfindende Horizontalbewegung der Bremsleisten in Abförderrichtung vorbeschleunigt. Nachteilig ist jedoch die aufwändige Konstruktion mit den beiden Parallelogrammhubwerken. Durch die Bewegungskopplung und die anfängliche Hebung der Bremsleisten bei deren Rückbewegung kann das Absenken der Bremsleisten erst dann erfolgen, wenn das Fördergut vollständig aus der Übergabestelle abtransportiert ist, da es sonst von den Bremsleisten wieder abgebremst werde würde. Dadurch kommt es zu Leistungsbeschränkungen.

Aus der US 2002/108839 A1 ist eine gattungsgemäße Transportvorrichtung bekannt, mit einer Fördereinheit, bestehend aus mehreren parallel zueinander angeordneten, antreibbaren Endlosfördermitteln und mit einem relativ zur Fördereinheit heb- und senkbaren Rollengang aus mehreren, jeweils zwischen den Endlosfördermitteln angeordneten Rollen, deren Drehachsen parallel zur Förderrichtung der Fördereinheit orientiert sind. Anstatt der Fördereinheit wird der Rollengang angehoben und abgesenkt, sodass dieser an beliebigen Stellen entlang der Fördereinheit angeordnet werden kann. Für das Abheben bzw. Absetzen von Produkten auf die angetriebenen Endlosfördermittel sind die bereits oben genannten Nachteile zu nennen.

Der Erfindung liegt die Aufgabe zugrunde, eine Vorrichtung zum Transport von Druckprodukten gemäß dem Oberbegriff des Anspruchs 1 zu schaffen, die bei einfacher Konstruktion eine einwandfreie und zuverlässige Übereckförderung und/oder Ein-/Ausschleusung der empfindlichen Druckprodukte ermöglicht.

Diese Aufgabe wird gemäß Anspruch 1 dadurch gelöst, dass die senkrechte Hubbewegung des Rollengangs von einer vergleichsweise wesentlich größeren, zur Achsrichtung der Rollen bzw. zur Förderrichtung der Fördereinheit parallelen Bewegung überlagert ist, und dass die Fördereinheit mit einem schwellenden Fördergeschwindigkeitsverlauf angetrieben ist, mit einer niedrigen Geschwindigkeit im Zeitpunkt der förderwirksamen Übernahme der Druckprodukte. Eine derartig ausgeführte Hubbewegung hat den Vorteil, dass die Druckprodukte in besagter Förderrichtung vorbeschleunigt auf die kontinuierlich laufenden Endlosfördermittel abgesetzt werden bzw. mit der Förderkomponente von der Fördereinheit abgehoben werden, um dann bis zum Ende der Hubbewegung abgebremst zu werden. Übereckförderungen können somit wesentlich produktschonender durchgeführt werden. Außerdem kann das Ein- und Ausschleusen in bzw. aus einem Produktstrom bei höheren Fördergeschwindigkeiten des Produktstroms erfolgen. Mit dem Vorteil einer einfachen Konstruktion wird anstatt der Fördereinheit der Rollengang angehoben und abgesenkt. Die Förderrollen des Rollengangs dienen sowohl zum Quertransport als auch zum Vorbeschleunigen bzw. zum Abbremsen. Zusätzlich zu steuernde Bremsmittel können in Fortfall gelangen. Mit dem schwellenden Fördergeschwindigkeitsverlauf der Fördereinheit ist die Differenzgeschwindigkeit zwischen dem Rollengang und der Fördereinheit im Moment der förderwirksamen Übernahme der Druckprodukte zusätzlich reduziert.

Nach Anspruch 2 ist vorgesehen, dass die Rollen zumindest in ihrer Achsrichtung einen Reibwiderstand zur möglichst schlupffreien Mitnahme der Druckprodukte darbieten. Die Druckprodukte können so über einen relativ kurzen Förderweg beschleunigt bzw. abgebremst werden.

Die abhängigen Ansprüche definieren bevorzugte Ausführungsformen der erfindungsgemäßen Transportvorrichtung.

Vorzugsweise erfolgt die Hubbewegung parallelverschoben, sodass im Moment des Absetzens bzw. Abhebens die Druckprodukte vollständig von der Fördereinheit abgehoben bzw. auf ihr abgesetzt werden und sie somit keinen Kantenbelastungen durch schräges Auf- oder Absetzen ausgesetzt sind. Die erfindungsgemäße Hubbewegung kann in einfacher Weise von einem Parallelkurbelgetriebe erzeugt werden, wobei der Rollengang an der Koppel des Parallelkurbelgetriebes angeordnet ist und die Kurbeln bei ausgehobenem Rollengang ungefähr in ihrer vertikalen Zenitstellung orientiert sind. Vorzugsweise wird das Parallelkurbelgetriebe über einen definierten Winkelbereich hin und her schwenkend angetrieben, wodurch die obere und untere Hubendlage sowie die horizontale Förderkomponente festlegbar sind.

Die Druckprodukte können in einfacher Weise von einem Schieberelement einer weiteren Fördereinrichtung auf bzw. vom angehobenen Rollengang geschoben werden. Mit dem Vorteil einer in Querrichtung definierten Ablage ist ein dem Schieberelement gegenüberliegender Anschlag an der Fördereinheit posionierbar.

Die Fördereinheit mit dem darin angeordneten, heb- und senkbaren Rollengang kann als Übereckförderer in einer Förderstrecke eingesetzt werden. Sie kann auch als Teilförderstrecke in einer in gleicher Richtung transportierenden Förderbahn angeordnet sein, zum Einschleusen von dem Rollengang zugeförderten Druckprodukten auf die Förderbahn. Alternativ ist die Fördereinheit mit dem darin angeordneten, heb- und senkbaren Rollengang auch zum Ausschleusen von auf der Förderbahn transportierten Druckprodukten einsetzbar.

Die Merkmale der vorliegenden Erfindung werden in der folgenden Beschreibung bevorzugter Ausführungsformen anhand der beigefügten, nachstehend aufgeführten Zeichnungen erläutert. Es zeigen
- **Fig. 1**: eine Fördereinheit mit zwei zueinander beabstandeten, erfindungsgemäß bewegbaren Rollengängen in perspektivischer Ansicht;
- **Fig. 2 a**: in einer Draufsicht eine Fördereinheit mit einem darin angeordneten, heb- und senkbaren Rollengang als Übereckförderer;

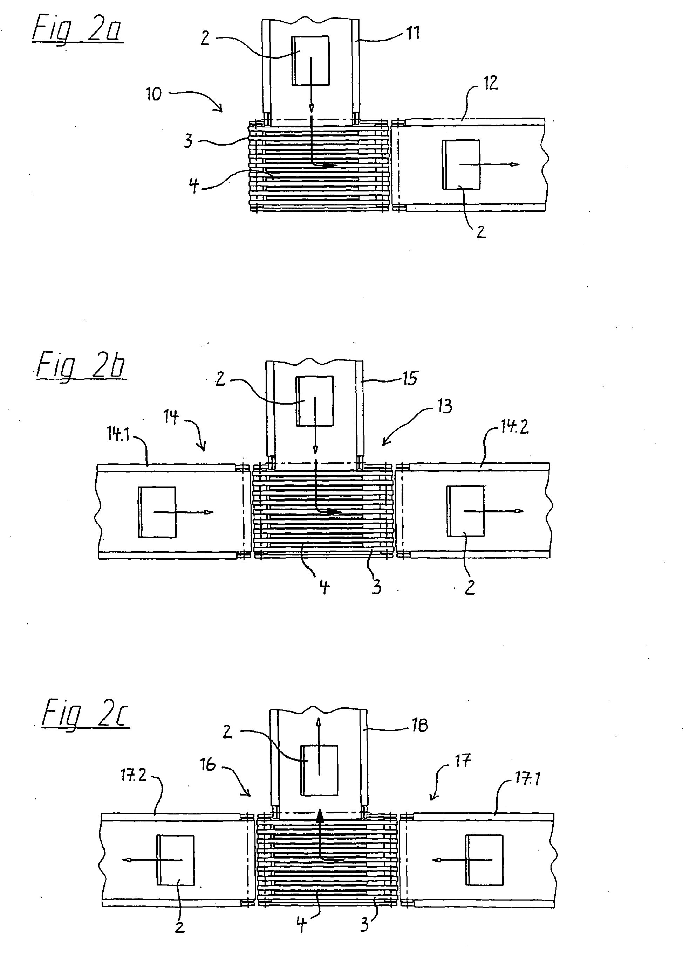

- **Fig. 2 b**: in gleicher Ansicht die Fördereinheit als Einschleusförderer für eine Förderbahn; und
- **Fig. 2 c**: in einer Draufsicht eine Fördereinheit mit erfindungsgemäß bewegbarem Rollengang als Ausschleusförderer einer Förderbahn.

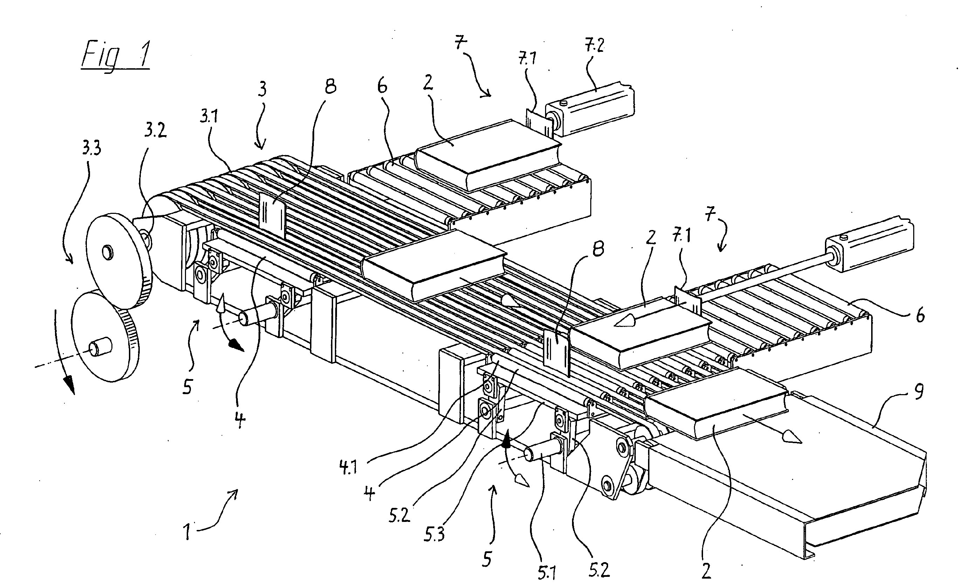

Die als Riemenförderer 3 ausgebildete Fördereinheit aus Fig. 1 ist mit den zwei zueinander beabstandeten, erfindungsgemäß bewegbaren Rollengängen 4 als Vereinigungsförderer 1 zum Zusammenführen von aus zwei nicht näher dargestellten Quellen bereitgestellten Büchern 2 bestimmt. Bei den Quellen kann es sich bspw. um im Parallelbetrieb arbeitende Bearbeitungsmaschinen handeln, die an den Büchern letzte Bearbeitungen vornehmen, wie das Falzeinbrennen und Ganzpressen. Im Ausführungsbeispiel werden die Bücher 2 aus den Bearbeitungsmaschinen jeweils um 180° phasenversetzt auf zugeordnete Rollengänge 6 flachliegend abgelegt und von dort dem jeweiligen Rollengang 4 des Vereinigungsförderers 1 zugeführt.

Der Riemenförderer 3 besteht aus einer Vielzahl von parallel zueinander angeordneten, von einer gemeinsamen Antriebswelle 3.2 angetriebenen Förderriemen 3.1. Die beiden Rollengänge 4 weisen jeweils mehrere frei drehbare, walzenförmige Tragrollen 4.1 auf, die jeweils zwischen den Förderriemen 3.1 mit zur Förderrichtung des Riemenförderers 3 parallelen Drehachsen angeordnet sind.

Die erfindungsgemäße Hubbewegung der Rollengänge 4 wird von Parallelkurbelgetrieben 5 erzeugt, jeweils bestehend aus im Gestell des Riemenförderers 4 gelagerten Kurbeln 5.2 und einer an den freien Enden der Kurbeln 5.2 angeordneten Koppel 5.3. Letztere ist als Traggerüst für die Tragrollen 4.1 des Rollengangs 4 ausgebildet. Jeweils eine der Kurbeln 5.2 ist mit einer Antriebswelle 5.1 verbunden, die von einer nicht näher dargestellten Antriebsvorrichtung vor und zurück drehend angetrieben ist, worauf sich besagte Koppel 5.3 mit dem auf ihr angeordneten Rollengang 4 translatorisch auf und ab bewegt.

Wie aus Fig. 1 ersichtlich, befindet sich der Rollengang 4 bei angehobener Stellung oberhalb der Förderriemen 3.1 und bildet mit dem jeweils zugeordneten Rollengang 6 eine gemeinsame Förderebene, sodass ein auf dem Rollengang 6 bereitgestelltes Buch 2 auf besagten Rollengang 4 überführbar ist. Dies geschieht mithilfe einer Zuführungseinrichtung 7, die aus einem von einem Pneumatikzylinder 7.2 vor und zurück bewegten Schieber 7.1 besteht und in zeitlicher Abstimmung mit der Hubbewegung des Rollengangs 4 das Buch 2 zu diesem überführt. Eine quer zur Förderrichtung des Riemenförderers 3 definierte Übergabeposition wird dabei durch einen entsprechend positionierten Anschlag 8 sichergestellt.

Das Parallelkurbelgetriebe 5 ist bei angehobenem Rollengang 4 ungefähr in seiner Zenitstellung. Die aus dieser Stellung erfolgende Absenkbewegung weist daher eine zusätzliche Förderkomponenten in Förderrichtung des Riemenförderers 3 auf, wodurch die auf dem Rollengang 4 befindlichen und auf den Riemenförderer 3 zu übergebenden Bücher 2 in dessen Förderrichtung vorbeschleunigt werden.

Die Differenzgeschwindigkeit zwischen dem Rollengang 4 und dem Riemenförderer 3 im Moment der förderwirksamen Übernahme der Bücher 2 ist dadurch weiter reduziert, dass der Riemenförderer 3 von einem Ellipsenrädergetriebe 3.3 mit einem schwellenden Fördergeschwindigkeitsverlauf angetrieben ist, wobei die Bücher 2 bei niedriger Geschwindigkeit auf dem Riemenförderer 3 abgelegt werden. Dadurch dass die Bücher 2 phasenversetzt auf die Rollengänge 6 ausgelegt werden, können sie abwechselnd dem Vereinigungsförderer 1 zugeführt werden, wie dies in Fig. 1 dargestellt ist. Die Bücher 2 werden zu einem kontinuierlichen Buchstrom vereinigt und anschließend einem konstant angetriebenen Transportband 9 zum Weitertransport an nachfolgenden Weiterbearbeitungsmaschinen übergeben.

Grundsätzlich lassen sich mit der erfindungsgemäßen Transportvorrichtung produktschonende Übereckförderungen, Einschleusungen und Ausschleusungen realisieren. In Fig. 2a ist ein aus dem Riemenförderer 3 und dem auf und ab bewegbaren Rollengang 4 gebildeter Übereckförderer 10 dargestellt, dem die Bücher 2 von einem Transportband 11 zugeführt werden und von dem sie einem Transportband 12 zum Weitertransport übergeben werden.

Fig. 2b zeigt einen Einschleusförderer 13 als Teilförderstrecke einer aus Transportbändern 14.1, 14.2 gebildeten Förderbahn 14. Bücher 2 werden von einem Transportband 15 zugeführt und mit dem Rollengang 4 des Einschleusförderers 13 in einer entsprechenden Lücke des Produktstroms eingeschleust.

In Fig. 2c ist der Riemenförderer 3 mit dem auf und ab bewegten Rollengang 4 als Ausschleusförderer 16 dargestellt, mit dem die Bücher 2 von der aus den Transportbändern 17.1 und 17.2 gebildeten Förderbahn 17 entnehmbar sind, zur Überführung an ein quer dazu angeordnetes Transportband 18. Die Bücher 2 werden dabei mit dem Rollengang 4 von dem Riemenförderer 3 abgehoben, wobei der Rollengang 4 im Moment der Übernahme eine Förderkomponente in Förderrichtung der Förderbahn 17 aufweist, zur Darbietung einer möglichst geringen Relativgeschwindigkeit zwischen dem Riemenförderer 3 und dem Rollengang 4 im Moment des Abhebens.

Bei den aufgezeigten Ausführungsformen Übereckförderer 10, Einschleusförderer 13 und Ausschleusförderer 16 ist vorgesehen, dass die Rollen 4.1 des heb- und senkbaren Rollengangs 4 angetrieben sind, um die Bücher 2 in bzw. aus der Übergabeposition zu transportieren. Der Quertransport könne aver auch mit dem beim Vereinigungsförderer 1 aus Fig. 1 vorgesehenen Schieber 7 erforgen, welcher alternativ zur pneumatischen Betätigung elektromotorisch angetrieben sein kann.

### Bezugszeichenliste

- **1**: Vereinigungsförderer
- **2**: Buch
- **3**: Riemenförderer
- **3.1**: Förderriemen
- **3.2**: Antriebswelle
- **3.3**: Ellipsenrädergetriebe
- **4**: Rollengang
- **4.1**: Tragrolle
- **5**: Parallelkurbelgetriebe
- **5.1**: Antriebswelle
- **5.2**: Kurbel
- **5.3**: Koppel
- **6**: Rollengang
- **7**: Zuführungseinrichtung
- **7.1**: Schieber
- **7.2**: Pneumatikzylinder
- **8**: Anschlag
- **9**: Transportband
- **10**: Übereckförderer
- **11**: Transportband
- **12**: Transportband
- **13**: Einschleusförderer
- **14**: Förderbahn
- **14.1**: Transportband
- **14.2**: Transportband
- **15**: Transportband
- **16**: Ausschleusförderer
- **16.1**: Förderrollenbahn
- **16.2**: Förderrolle
- **17**: Förderbahn
- **17.1**: Transportband
- **17.2**: Transportband
- **18**: Transportband

## Patentansprüche

1. Vorrichtung zum Transport von Druckprodukten (2), wie Buchblocks, Bücher oder Stapel aus Druckerzeugnissen, insb. aus gefalzten und/oder ungefalzten Druckbogen,
• mit einer Fördereinheit (3), bestehend aus mehreren parallel zueinander angeordneten, antreibbaren Endlosfördermitteln (3.1),
• mit einem relativ zur Fördereinheit (3) heb- und senkbaren Rollengang (4) aus mehreren, jeweils zwischen den Endlosfördermitteln (3.1) angeordneten Rollen (4.1), deren Drehachsen parallel zur Förderrichtung der Fördereinheit (3) orientiert sind,
**dadurch gekennzeichnet**
• **dass** die senkrechte Hubbewegung des Rollengangs (4) von einer vergleichsweise wesentlich größeren, zur Achsrichtung der Rollen (4.1) bzw. zur Förderrichtung der Fördereinheit (3) parallelen Bewegung überlagert ist, und
• **dass** die Fördereinheit (3) mit einem schwellenden Fördergeschwindigkeitsverlauf angetrieben ist, mit einer niedrigen Geschwindigkeit im Zeitpunkt der förderwirksamen Übernahme der Druckprodukte (2).

2. Vorrichtung nach Anspruch 1, **dadurch gekennzeichnet, dass** die Rollen (4.1) zumindest in ihrer Achsrichtung einen Reibwiderstand zur möglichst schlupffreien Mitnahme der Druckprodukte (2) darbieten.

3. Vorrichtung nach Anspruch 1 oder 2, **gekennzeichnet durch** eine im Wesentlichen parallelverschobene Hubbewegung des Rollengangs (4).

4. Vorrichtung nach einem der Ansprüche 1 bis 3, **dadurch gekennzeichnet, dass** der Rollengang (4) an der Koppel (5.3) eines Parallelkurbelgetriebes (5) angeordnet ist, wobei die Kurbeln (5.2) bei ausgehobenem Rollengang (4) ungefähr in ihrer vertikalen Zenitstellung orientiert sind.

5. Vorrichtung nach Anspruch 4, **dadurch gekennzeichnet, dass** das Parallelkurbelgetriebe (5) über einen definierten Winkelbereich hin und her schwenkend angetrieben ist.

6. Vorrichtung nach einem der Ansprüche 1 bis 5, **dadurch gekennzeichnet, dass** die Druckprodukte (2) von einem Schieberelement (7.1) einer weiteren Fördereinrichtung (6, 7) auf bzw. vom angehobenen Rollengang (4) geschoben werden.

7. Vorrichtung nach Anspruch 6, **dadurch gekennzeichnet, dass** beim Aufschieben ein dem Schieberelement (7.1) gegenüberliegender Anschlag (8) an der Fördereinheit (3) positionierbar ist.

8. Vorrichtung nach einem der Ansprüche 1 bis 7, **dadurch gekennzeichnet, dass** die Fördereinheit (3) mit dem darin angeordneten, heb- und senkbaren Rollengang (4) als Übereckförderer (10) dient.

9. Vorrichtung nach einem der Ansprüche 1 bis 8, **dadurch gekennzeichnet, dass** die Fördereinheit (3) mit dem darin angeordneten, heb- und senkbaren Rollengang (4) als Teilförderstrecke (13) in einer in gleicher Richtung transportierenden Förderbahn (14) angeordnet ist, zum Einschleusen von dem Rollengang (4) zugeförderten Druckprodukten (2) auf die Förderbahn (14).

10. Vorrichtung nach einem der Ansprüche 1 bis 7, **dadurch gekennzeichnet, dass** die Fördereinheit (3) mit dem darin angeordneten, heb- und senkbaren Rollengang (4) als Teilförderstrecke (16) in einer in gleicher Richtung transportierenden Förderbahn (17) angeordnet ist, zum Ausschleusen von auf der Förderbahn (17) transportierten Druckprodukten (2).

## Claims

1. A device for transporting printed products (2) such as book blocks, books or stacks of printed products, particularly folded and/or unfolded sheets,
• with a conveyor unit (3) consisting of several endless conveying means (3.1) that are arranged parallel to one another and can be driven,
• with a roller table (4) that can be raised and lowered relative to the conveyor unit (3) and consists of several rollers (4.1) that are respectively arranged between the endless conveying means (3.1) and the rotational axes of which are oriented parallel to the conveying direction of the conveyor unit (3),
**characterized in**
• **that** the vertical lifting movement of the roller table (4) is superimposed with a comparatively much larger movement parallel to the axial direction of the rollers (4.1) or the conveying direction of the conveyor unit (3), respectively, and in
• **that** the conveyor unit (3) is driven with an intermittent conveying speed profile, namely with a slower speed at the time of the effective transfer of the printed products (2) being conveyed.

2. The device according to Claim 1, **characterized in that** the rollers (4.1) have a frictional resistance at least in their axial direction in order to carry the printed products (2) in a largely non-slip fashion.

3. The device according to Claim 1 or 2, **characterized in** a lifting movement of the roller table (4) that essentially consists of a parallel displacement.

4. The device according to one of Claims 1 to 3, **characterized in that** the roller table (4) is arranged on the coupler (5.3) of a parallel crank mechanism (5), wherein the cranks (5.2) are approximately oriented in their vertical zenith position when the roller table (4) is lifted out.

5. The device according to Claim 4, **characterized in that** the parallel crank mechanism (5) is driven such that it carries out a reciprocating pendulum movement over a defined angular range.

6. The device according to one of Claims 1 to 5, **characterized in that** the printed products (2) are pushed on and off the raised roller table (4) by a pusher element (7.1) of another conveyor mechanism (6, 7).

7. The device according to Claim 6, **characterized in that** a stop (8) arranged opposite of the pusher element (7.1) can be positioned on the conveyor unit (3) when the printed products are pushed on.

8. The device according to one of Claims 1 to 7, **characterized in that** the conveyor unit (3) with the raisable and lowerable roller table (4) arranged therein serves as a diagonal conveyor (10).

9. The device according to one of Claims 1 to 8, **characterized in that** the conveyor unit (3) with the raisable and lowerable roller table (4) arranged therein is arranged in a conveyor track (14) that transports in the same direction in the form of a partial conveying section (13) in order to realize the inward transfer of printed products (2) supplied to the roller table (4) onto the conveyor track (14).

10. The device according to one of Claims 1 to 7, **characterized in that** the conveyor unit (3) with the raisable and lowerable roller table (4) arranged therein is arranged in a conveyor track (17) that transports in the same direction in the form of a partial conveying section (16) in order to realize the outward transfer of printed products (2) transported on the conveyor track (17).

## Revendications

1. Dispositif destiné au transport de produits d'impression (2) tels que des corps d'ouvrage, des livres ou des piles de produits d'impression, notamment de feuilles d'impression pliées et/ou non pliées
• avec une unité de transport (3) consistant dans plusieurs moyens de transport continus (3.1), susceptibles d'être entraînés, disposés à la parallèle les uns des autres,
• avec un transporteur à rouleaux (4) relevable ou abaissable par rapport à l'unité de transport (3), consistant dans plusieurs rouleaux (4.1) disposés chacun entre les moyens de transport continus (3.1), dont les axes de rotation sont orientés à la parallèle de la direction de transport de l'unité de transport (3),
**caractérisé en ce que**
• le mouvement de levée verticale du transporteur à rouleaux (4) est superposé par un déplacement comparativement sensiblement plus important, parallèle à la direction axiale des rouleaux (4.1), respectivement à la direction de transport de l'unité de transport (3) et
• **en ce que** l'unité de transport (3) est entraînée par une courbe de vitesse de transport gonflante, à une basse vitesse au moment de la reprise efficace des produits d'impression (2) au transport.

2. Dispositif selon la revendication 1, **caractérisé en ce que** les rouleaux (4.1) offrent au moins dans leur direction axiale une résistance par friction pour l'entraînement si possible sans dérive des produits d'impression (2).

3. Dispositif selon la revendication 1 ou 2, **caractérisé par** un mouvement de levée sensiblement déplacé en parallèle du transporteur à rouleaux (4).

4. Dispositif selon l'une quelconque des revendications 1 à 3, **caractérisé en ce que** le transporteur à rouleaux (4) est disposé sur la bielle (5.3) d'un biellage parallèle (5), lorsque le transporteur à rouleaux (4) est soulevé, les manivelles (5.2) étant orientées approximativement dans leur position de zénith verticale.

5. Dispositif selon la revendication 4, **caractérisé en ce que** le biellage parallèle (5) est entraîné en pivotement aller et retour sur une plage angulaire définie.

6. Dispositif selon l'une quelconque des revendications 1 à 5, **caractérisé en ce que** les produits d'impression (2) sont poussés par un élément curseur (7.1) d'une unité de transport supplémentaire (6, 7) sur, respectivement par le transporteur à rouleaux (4) relevé.

7. Dispositif selon la revendication 6, **caractérisé en ce que** lors de la poussée, une butée (8) opposée à l'élément curseur (7.1) est positionnable sur l'unité de transport (3).

8. Dispositif selon l'une quelconque des revendications 1 à 7, **caractérisé en ce que** l'unité de transport (3) avec le transporteur à rouleaux (4) relevable et abaissable disposé dans cette dernière sert de transporteur en diagonale (10).

9. Dispositif selon l'une quelconque des revendications 1 à 8, **caractérisé en ce que** l'unité de transport (3) avec le transporteur à rouleaux (4) relevable et abaissable disposé dans cette dernière est disposée en tant que trajet de transport partiel (13) dans une voie de convoyage (14) transportant dans une même direction, pour l'éclusage de produits d'impression (2) transportés vers le transporteur à rouleaux (4) sur la voie de convoyage (14).

10. Dispositif selon l'une quelconque des revendications 1 à 7, **caractérisé en ce que** l'unité de transport (3) avec le transporteur à rouleaux (4) relevable et abaissable disposé dans cette dernière est disposée en tant que trajet de transport partiel (16) dans une voie de convoyage (17) transportant dans une même direction, pour l'éclusage de produits d'impression (2) transportés sur la voie de convoyage (17).
